# EUROPÄISCHE PATENTSCHRIFT

(11) **EP 2 450 581 B1**
(45) Veröffentlichungstag und Bekanntmachung des Hinweises auf die Patenterteilung: **11.05.2016**
(21) Anmeldenummer: 11184059.1
(22) Anmeldetag: 06.10.2011
(51) Int. Cl.: F16B 15/00

(54) **Befestigungsvorrichtung**
Attachment device
Dispositif de fixation

(30) Priorität: 04.11.2010 DE 102010043425
(43) Veröffentlichungstag der Anmeldung: 09.05.2012
(73) Patentinhaber: HILTI Aktiengesellschaft, 9494 Schaan (LI)
(72) Erfinder: Foser, Thomas, 9496 Balzers (LI); Schwertner, Wolfram, 9475 Sevelen (CH); Domani, Günther, 88138 Weissensberg (DE)
(74) Vertreter: Hilti Aktiengesellschaft Corporate Intellectual Property

(56) Entgegenhaltungen:
- AT-B- 184 524
- US-A- 5 569 010

## Beschreibung

### Technisches Gebiet

Die Erfindung betrifft eine Vorrichtung zur Befestigung eines ersten Gegenstandes an einem zweiten Gegenstand, mit einem Befestigungselement und einem Ringelement.

### Stand der Technik

Derartige Befestigungsvorrichtungen weisen als Befestigungselement üblicherweise einen Nagel oder Dergleichen auf, welcher in den zweiten Gegenstand, beispielsweise einen Untergrund, eintreibbar ist. Das Ringelement ist auf einen Schaft des Nagels aufgezogen und weist ein Widerlager für eine Abstützung des ersten Gegenstandes auf. Gegebenenfalls wird das Widerlager beziehungsweise das Ringelement seinerseits von einem Kopf des Befestigungselements abgestützt. Ausserdem weisen derartige Vorrichtungen unter Umständen noch eine Beilagscheibe auf, welche eine Haltekraft von dem Widerlager auf den ersten Gegenstand überträgt.

Bekannt sind Befestigungsvorrichtungen, bei denen das Ringelement einen Kragen aufweist, durch den ein Schaft des Nagels in einer Befestigungsrichtung durchgesteckt ist, und der mit einer gleichmässigen Übergangskrümmung in eine Flanke des Widerlagers übergeht. Während des Eintreibens der Befestigungsvorrichtung in den Untergrund wird nun der Kragen in der Befestigungsrichtung gestaucht und übt seinerseits eine radial nach aussen wirkende Kraft auf das Widerlager auf. Das Widerlager wird so zunächst nach aussen verformt, wobei ein Aussenrand des Widerlagers aufgrund der Übergangskrümmung schliesslich entgegen der Befestigungsrichtung aufgestellt wird. Der Aussenrand ragt dann unter Umständen von dem zu befestigenden ersten Gegenstand ab.

Aus der US 5 569 010 ist ein Befestigungselement mit einem Schaft bekannt, bei dem der Schaft mit einer Spitze versehen ist. Die Spitze ist mit einem Vorspannelement umgeben, welches sich aus einem Hülsenteil und einem Auflageteil derart zusammensetzt, dass das Vorspannelement unter Materialverformung ineinander verschoben werden kann.

### Darstellung der Erfindung

Die Aufgabe wird gelöst mit einer Vorrichtung zur Befestigung eines ersten Gegenstandes an einem zweiten Gegenstand, mit einem Befestigungselement, wobei das Befestigungselement einen länglichen Schaft umfasst, und einem Ringelement, wobei das Ringelement einen Kragen, durch den der Schaft in einer Befestigungsrichtung durchsteckbar ist, und ein Widerlager, an dem der erste Gegenstand abstützbar ist, umfasst, wobei das Ringelement zwischen dem Kragen und dem Widerlager eine Sollknickstelle aufweist. Durch ein vorbestimmtes Abknicken des Ringelementes wird erreicht, dass das Widerlager während des Eintreibens der Vorrichtung in einen Untergrund definiert radial nach aussen geschoben wird. Eine Neigung eines radial äusseren Randes des Widerlagers, sich entgegen der Befestigungsrichtung aufzustellen, wird vermindert. Unter Umständen stellt sich der radial äussere Rand während des Eintreibens gar nicht auf.

Eine bevorzugte Ausführungsform ist dadurch gekennzeichnet, dass die Sollknickstelle eine Knicklinie umfasst. Besonders bevorzugt verläuft die Knicklinie quer zur Befestigungsrichtung. Vorteilhafterweise ist die Sollknickstelle bereits geknickt, insbesondere mit einem Krümmungsradius von weniger als 1 mm auf der Innenseite der Knicklinie. Bevorzugt beträgt der Krümmungsradius weniger als 0,8 mm, besonders bevorzugt weniger als 0,6 mm. Hierdurch wird sichergestellt, dass das Abknicken des Ringelementes während des Eintreibens entlang der Knicklinie stattfindet. Ein Knickwinkel der Knicklinie beträgt bevorzugt zwischen 20° und 80°, besonders bevorzugt zwischen 30° und 60°.

Eine weitere bevorzugte Ausführungsform ist dadurch gekennzeichnet, dass das Befestigungselement in dem Kragen gehalten ist, insbesondere reibschlüssig gehalten ist.

Eine weitere bevorzugte Ausführungsform ist dadurch gekennzeichnet, dass das Befestigungselement einen Kopf aufweist, welcher den Schaft quer zu einer Längsrichtung des Schaftes überragt.

Eine weitere bevorzugte Ausführungsform ist dadurch gekennzeichnet, dass der Schaft ein erstes und ein zweites Ende aufweist, und wobei der Kopf an dem ersten Ende angeordnet ist und/oder das zweite Ende eine Spitze aufweist.

Eine weitere bevorzugte Ausführungsform ist dadurch gekennzeichnet, dass das Ringelement den Schaft ringförmig umschliesst, insbesondere mit einer im Wesentlichen kreisförmigen Innen- und/oder Aussenkontur.

Eine weitere bevorzugte Ausführungsform ist dadurch gekennzeichnet, dass das Befestigungselement und/oder das Ringelement ein Metall und/oder eine Legierung umfasst, insbesondere aus einem Metall und/oder einer Legierung besteht.

Eine weitere bevorzugte Ausführungsform ist dadurch gekennzeichnet, dass der Kragen und/oder das Widerlager an die Sollknickstelle heranreicht.

Eine weitere bevorzugte Ausführungsform ist dadurch gekennzeichnet, dass an der Sollknickstelle der Kragen einen kleineren Winkel zur Befestigungsrichtung aufweist als das Widerlager. Insbesondere beträgt der Winkel beim Kragen 0°, wohingegen das Widerlager insbesondere radial von dem Kragen nach aussen absteht.

Eine weitere bevorzugte Ausführungsform ist dadurch gekennzeichnet, dass der Kragen zumindest teilweise parallel zur Befestigungsrichtung verläuft.

Eine weitere bevorzugte Ausführungsform ist dadurch gekennzeichnet, dass das Widerlager eine insbesondere an die Sollknickstelle heranreichende erste Flanke umfasst.

Eine weitere bevorzugte Ausführungsform ist dadurch gekennzeichnet, dass das Widerlager eine zweite Flanke aufweist, welche an die erste Flanke anschliesst, insbesondere unmittelbar an die erste Flanke anschliesst.

Eine weitere bevorzugte Ausführungsform ist dadurch gekennzeichnet, dass sich die zweite Flanke von der ersten Flanke, insbesondere von einem radial äusseren Rand der ersten Flanke, radial nach aussen erstreckt.

Eine weitere bevorzugte Ausführungsform ist dadurch gekennzeichnet, dass sich die zweite Flanke von der ersten Flanke, insbesondere von einem radial äusseren Rand der ersten Flanke, radial nach innen erstreckt.

Eine weitere bevorzugte Ausführungsform ist dadurch gekennzeichnet, dass das Widerlager eine Versteifungsrippe aufweist. Besonders bevorzugt weist das Widerlager zwei oder mehr Versteifungsrippen auf, welche insbesondere gleichmässig über einen Umfang des Ringelements verteilt sind. Bevorzugt erstreckt sich die Versteifungsrippe von einem inneren Rand der ersten Flanke bis zu einem Aussenrand der ersten Flanke oder von einem inneren Rand des Widerlagers bis zu einem Aussenrand des Widerlagers. Bevorzugt reicht die Versteifungsrippe an die Sollknickstelle heran. Gemäss einer bevorzugten Ausführungsform umfasst die Versteifungsrippe eine Auswölbung des Widerlagers entgegen der Befestigungsrichtung. Gemäss einer weiteren Ausführungsform umfasst die Versteifungsrippe eine Auswölbung des Widerlagers in Befestigungsrichtung.

### Ausführungsbeispiele

Die Erfindung wird nun anhand von Ausführungsbeispielen unter Bezugnahme auf die Zeichnungen näher erläutert werden. Es zeigen:
Fig. 1 eine Schrägansicht eines Ringelements,
Fig. 2 eine Schnittansicht einer Befestigungsvorrichtung,
Fig. 3 eine Schrägansicht Ringelements und
Fig. 4 eine Schnittansicht einer Befestigungsvorrichtung.

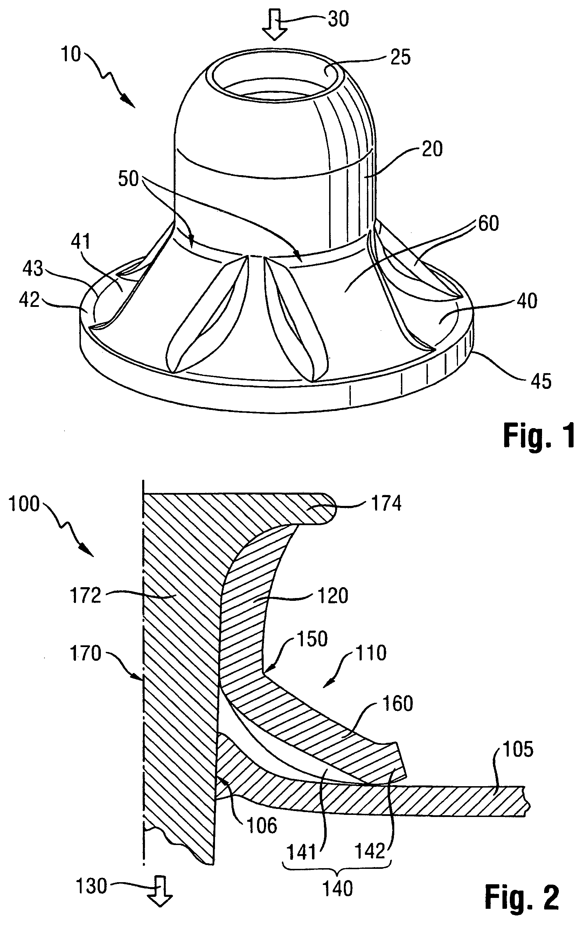

In Fig. 1 ist ein Ringelement 10 einer Vorrichtung zur Befestigung eines nicht dargestellten ersten Gegenstandes, beispielsweise eines oder mehrerer Bleche, an einem ebenfalls nicht dargestellten zweiten Gegenstand, beispielsweise einem weiteren Blech, in einer Schrägansicht dargestellt. Der erste Gegenstand besteht bevorzugt aus Metall, insbesondere Stahl oder Aluminium, aus Holz oder aus Kunststoff, wobei der zweite Gegenstand bevorzugt aus Beton, aus Metall, insbesondere Stahl oder Aluminium, aus Holz oder aus Kunststoff besteht.

Das Ringelement 10 umfasst einen Kragen 20, durch den ein nicht dargestelltes Befestigungselement, insbesondere ein Schaft des Befestigungselementes, in einer Befestigungsrichtung 30 durchsteckbar ist. Bevorzugt wird das Befestigungselement an dem kreisförmigen Innenrand 25 des Kragens 20 mittels Presssitzes gehalten. Der Kragen verläuft dabei grösstenteils parallel zur Befestigungsrichtung und ist in diesem Bereich insbesondere zylinderförmig ausgebildet.

Weiterhin umfasst das Ringelement 10 ein Widerlager 40, an dem der erste Gegenstand abstützbar ist. Das Widerlager 40 weist eine erste Flanke 41 und eine unmittelbar an die erste Flanke anschliessende zweite Flanke 42 auf, wobei sich die zweite Flanke 42 von einem radial äusseren Rand 43 der ersten Flanke 41, radial nach aussen bis zu einem Aussenrand 45 des Widerlagers 40 erstreckt. Der Innenrand 25 und der Aussenrand 45 bilden die Innen- beziehungsweise Aussenkontur des Ringelementes 10, so dass das Ringelement das nicht dargestellte Befestigungselement ringförmig umschliesst.

Zwischen dem Kragen 20 und dem Widerlager 40 weist das Ringelement 10 mehrere als bereits geknickte Knicklinien 50 ausgebildete Sollknickstellen auf. Ein Krümmungsradius des Materials des Ringelements 10 auf der in Fig. 1 sichtbaren Innenseite der Knicklinien beträgt bevorzugt 0,5 mm. Die Knicklinien 50 verlaufen quer zur Befestigungsrichtung 30 umlaufend am Kragen 20 entlang, wobei der Kragen 20 an die Knicklinien 50 heranreicht.

Das Widerlager 40 weist mehrere, insbesondere vier Versteifungsrippen 60 auf, welche gleichmässig über den Umfang des Ringelements 10 verteilt sind und sich jeweils von einem Innenrand des Widerlagers 40 beziehungsweise der ersten Flanke 41 bei den Knicklinien 50 bis zu einem Aussenrand des Widerlagers 40 beziehungsweise der ersten Flanke 41 erstrecken. Die Versteifungsrippen 60 reichen also an die jeweiligen Knicklinien 50 heran. Jede Versteifungsrippe 60 ist durch eine Auswölbung des Widerlagers 40 entgegen der Befestigungsrichtung gebildet und weist einen Neigungswinkel zur Befestigungsrichtung 30 von 40° auf. Somit beträgt der Knickwinkel der Knicklinien 50 ebenfalls 40°. Das Ringelement 10 ist aus einem Metall oder einer Legierung mittels eines Stanz- und Tiefziehprozesses herstellbar.

In Fig. 2 ist eine Vorrichtung 100 zur Befestigung eines ersten Gegenstandes 105, hier eines Bleches, an einem nicht dargestellten zweiten Gegenstand, beispielsweise einem weiteren Blech, nach einem Befestigungsvorgang in einem Längsschnitt dargestellt. Die Vorrichtung 100 umfasst ein Befestigungselement 170 sowie ein Ringelement 110, beispielsweise das Ringelement aus Fig. 1. Das Befestigungelement 170 ist als Nagel ausgebildet und umfasst einen Schaft 172, an dessen einem Ende ein den Schaft 172 überragender Kopf 174 und an dessen anderem Ende eine nicht dargestellte Spitze angeordnet ist.

Das Ringelement 110 umfasst einen Kragen 120, durch den das Befestigungselement 170 durchgesteckt ist. Weiterhin umfasst das Ringelement 110 ein Widerlager 140, an dem der erste Gegenstand 105 abgestützt ist. Das Widerlager 140 weist eine erste Flanke 141 und eine unmittelbar an die erste Flanke 141 anschliessende zweite Flanke 142 auf, wobei sich die zweite Flanke 242 von der ersten Flanke 141 radial nach aussen erstreckt. Das Widerlager 140 weist zumindest eine Versteifungsrippe 160 auf, welche durch eine Auswölbung des Widerlagers 140 entgegen der Befestigungsrichtung gebildet ist.

Zur Befestigung des ersten Gegenstandes 105 an dem zweiten Gegenstand wurde das Befestigungselement 170 in einer Befestigungsrichtung 130 in den zweiten Gegenstand eingetrieben. Dabei wurde das Ringelement 110 in der Befestigungsrichtung 130 zwischen dem Kopf 174 des Befestigungselements 170 und dem ersten Gegenstand 105 eingeklemmt und gestaucht, so dass der Kragen 120 verformt wurde und sich an eine Aussenkontur des Befestigungselements 170 angelegt hat. Aufgrund einer zwischen dem Kragen 120 und dem Widerlager 140 beziehungsweise dessen Verstärkungsrippe 160 angeordneten Sollknickstelle ist das Ringelement 110 während der Stauchung entlang einer umlaufenden Knicklinie 150 derart abgeknickt, dass sich ein Knickwinkel zwischen dem Kragen 120 und dem Widerlager 140 beziehungsweise dessen Verstärkungsrippe 160 von etwa 60° ergibt. Dieser Knickwinkel hängt jedoch von dem Befestigungsvorgang ab, insbesondere von den Materialien des ersten und des zweiten Gegenstandes sowie von dem Energiebetrag, mit dem das Befestigungselement 170 eingetrieben wird. Insbesondere bei hohen Eintreibenergien ist ein Knickwinkel zwischen dem Kragen 120 und dem Widerlager 140 beziehungsweise dessen Verstärkungsrippe 160 von deutlich mehr als 90° möglich.

Der erste Gegenstand 105 stützt sich dann von unten an dem Widerlager 140 beziehungsweise dessen zweiter Flanke 142 ab, bevorzugt in einem radial aussen liegenden Bereich. Unter Umständen wird das Befestigungselement 170 gegen Scherkräfte gestützt und die Gefahr eines Verkippens des Befestigungselements 170 verringert oder vermieden. In Fig. 2 ist zu erkennen, dass der erste Gegenstand 105 im Bereich seiner Kontaktfläche 106 zu dem Befestigungselement 170 während des Befestigungsvorgangs ebenfalls verformt wurde. Durch die Versteifung mittels der Versteifungsrippe 160 wird unter Umständen ein Widerstandsmoment der Vorrichtung 100 gegen Auszugskräfte aus dem zweiten Gegenstand erhöht, so dass eine hohe Tragfähigkeit der Vorrichtung 100 erreichbar ist.

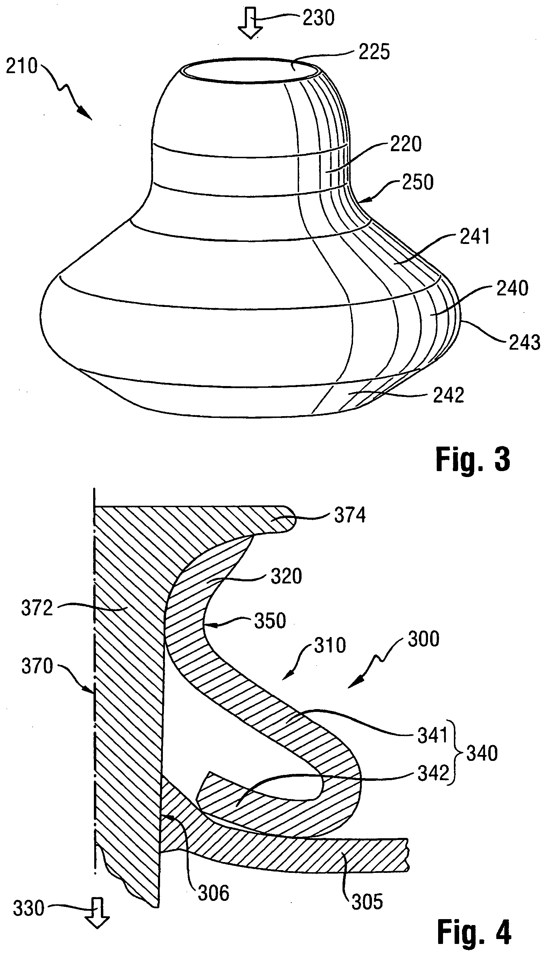

In Fig. 3 ist ein Ringelement 210 einer Vorrichtung zur Befestigung eines nicht dargestellten ersten Gegenstandes, beispielsweise eines oder mehrerer Bleche, an einem ebenfalls nicht dargestellten zweiten Gegenstand, beispielsweise einem weiteren Blech, in einer Schrägansicht dargestellt.

Das Ringelement 210 umfasst einen Kragen 220, durch den ein nicht dargestelltes Befestigungselement, insbesondere ein Schaft des Befestigungselementes, in einer Befestigungsrichtung 230 durchsteckbar ist. Bevorzugt wird das Befestigungselement an dem kreisförmigen Innenrand 225 des Kragens 220 mittels Presssitzes gehalten. Der Kragen 220 verläuft dabei grösstenteils parallel zur Befestigungsrichtung und ist in diesem Bereich insbesondere zylinderförmig ausgebildet.

Weiterhin umfasst das Ringelement 210 ein Widerlager 240, an dem der erste Gegenstand abstützbar ist. Das Widerlager 240 weist eine erste Flanke 241 und eine unmittelbar an die erste Flanke anschliessende zweite Flanke 242 auf, wobei sich die zweite Flanke 242 von einem radial äusseren Rand 243 der ersten Flanke 241 radial nach innen erstreckt. Der Innenrand 225 und der äussere Rand 243 bilden die Innen- beziehungsweise Aussenkontur des Ringelementes 210, so dass das Ringelement das nicht dargestellte Befestigungselement ringförmig umschliesst. Zwischen der zweiten Flanke 242 und dem Befestigungselement verbleibt dabei ein Spalt. Bei einem nicht dargestellten Ausführungsbeispiel reicht die zweite Flanke an das Befestigungselement heran.

Zwischen dem Kragen 220 und dem Widerlager 240 weist das Ringelement 210 eine umlaufende Sollknickstelle 250 auf. Ein Krümmungsradius des Materials des Ringelements 210 auf der in Fig. 3 sichtbaren Innenseite der Sollknickstelle beträgt bevorzugt zwischen 1 mm und 2 mm, im vorliegenden Ausführungsbeispiel 1,6 mm. Die Sollknickstelle 250 verläuft quer zur Befestigungsrichtung 230 umlaufend am Kragen 220 entlang, wobei der Kragen 220 an die Sollknickstelle 250 heranreicht. Ein Knickwinkel der Sollknickstelle 250 beträgt 40°. Das Ringelement 210 ist aus einem Metall oder einer Legierung mittels eines Rollierprozesses herstellbar.

In Fig. 4 ist eine Vorrichtung 300 zur Befestigung eines ersten Gegenstandes 305, hier eines Bleches, an einem nicht dargestellten zweiten Gegenstand, beispielsweise einem weiteren Blech, nach einem Befestigungsvorgang in einem Längsschnitt dargestellt. Die Vorrichtung 300 umfasst ein Befestigungselement 370 sowie ein Ringelement 310, beispielsweise das Ringelement aus Fig. 3. Das Befestigungelement 370 ist als Nagel ausgebildet und umfasst einen Schaft 372, an dessen einem Ende ein den Schaft 372 überragender Kopf 374 und an dessen anderem Ende eine nicht dargestellte Spitze angeordnet ist.

Das Ringelement 310 umfasst einen Kragen 320, durch den das Befestigungselement 370 durchgesteckt ist. Weiterhin umfasst das Ringelement 310 ein Widerlager 340, an dem der erste Gegenstand 305 abgestützt ist. Das Widerlager 340 weist eine erste Flanke 341 und eine unmittelbar an die erste Flanke 341 anschliessende zweite Flanke 342 auf, wobei sich die zweite Flanke 342 von der ersten Flanke 341 radial nach innen erstreckt.

Zur Befestigung des ersten Gegenstandes 305 an dem zweiten Gegenstand wurde das Befestigungselement 370 in einer Befestigungsrichtung 330 in den zweiten Gegenstand eingetrieben. Dabei wurde das Ringelement 310 in der Befestigungsrichtung 330 zwischen dem Kopf 374 des Befestigungselements 370 und dem ersten Gegenstand 305 eingeklemmt und gestaucht, so dass der Kragen 320 verformt wurde und sich an eine Aussenkontur des Befestigungselements 370 angelegt hat. Aufgrund einer zwischen dem Kragen 320 und dem Widerlager 340 beziehungsweise dessen erster Flanke 341 angeordneten Sollknickstelle ist das Ringelement 310 während der Stauchung entlang einer umlaufenden Knicklinie 350 derart abgeknickt, dass sich ein Knickwinkel zwischen dem Kragen 320 und dem Widerlager 340 beziehungsweise dessen erster Flanke 341 von etwa 90° ergibt. Dieser Knickwinkel hängt jedoch auch hier von dem Befestigungsvorgang ab und kann bis zu 180° betragen, insbesondere wenn das Befestigungselement 370 sehr weit in den ersten und/oder zweiten Gegenstand eingetrieben wird.

Der erste Gegenstand 305 Stützt sich dann von unten an dem Widerlager 340 beziehungsweise dessen zweiter Flanke 342 ab, bevorzugt in einem radial aussen liegenden Bereich. Unter Umständen wird das Befestigungselement 370 gegen Scherkräfte gestützt und die Gefahr eines Verkippens des Befestigungselements 370 verringert oder vermieden. In Fig. 4 ist zu erkennen, dass der erste Gegenstand 305 im Bereich seiner Kontaktfläche 306 zu dem Befestigungselement 370 während des Befestigungsvorgangs ebenfalls verformt wurde. Durch Materialverdoppelung mittels des Aufeinanderliegens der ersten Flanke 341 und der zweiten Flanke 342 wird unter Umständen ein Widerstandsmoment der Vorrichtung 300 gegen Auszugskräfte aus dem zweiten Gegenstand erhöht, so dass eine hohe Tragfähigkeit der Vorrichtung 300 erreichbar ist.

Die Erfindung wurde anhand des Beispiels einer Befestigungsvorrichtung beschrieben. Es wird jedoch darauf hingewiesen, dass die Erfindung auch für andere Zwecke geeignet ist.

## Patentansprüche

1. Vorrichtung zur Befestigung eines ersten Gegenstandes an einem zweiten Gegenstand, mit einem Befestigungselement (170), wobei das Befestigungselement einen länglichen Schaft (172) umfasst, und einem Ringelement (10), wobei das Ringelement einen Kragen (20), durch den der Schaft in einer Befestigungsrichtung durchsteckbar ist, und ein Widerlager (40), an dem der erste Gegenstand abstützbar ist, umfasst, **dadurch gekennzeichnet, dass** das Ringelement (10) zwischen dem Kragen (20) und dem Widerlager (40) eine Sollknickstelle (50) aufweist, die ein vorbestimmtes Abknicken des Ringelements ermöglicht, so dass das Widerlager (40) während eines Eintreibens des Befestigungselements in den zweiten Gegenstand radial nach aussen geschoben wird.

2. Vorrichtung nach Anspruch 1, wobei die Sollknickstelle (50) eine Knicklinie umfasst.

3. Vorrichtung nach Anspruch 2, wobei die Knicklinie quer zur Befestigungsrichtung verläuft.

4. Vorrichtung nach einem der vorhergehenden Ansprüche, wobei das Befestigungselement in dem Kragen (20) gehalten ist, insbesondere reibschlüssig gehalten ist.

5. Vorrichtung nach einem der vorhergehenden Ansprüche, wobei das Befestigungselement einen Kopf (174) aufweist, welcher den Schaft (172) quer zu einer Längsrichtung des Schaftes überragt.

6. Vorrichtung nach Anspruch 5, wobei der Schaft (172) ein erstes und ein zweites Ende aufweist, und wobei der Kopf (174) an dem ersten Ende angeordnet ist und/oder das zweite Ende eine Spitze aufweist.

7. Vorrichtung nach einem der vorhergehenden Ansprüche, wobei das Ringelement (10) den Schaft (172) ringförmig umschliesst, insbesondere mit einer im Wesentlichen kreisförmigen Innen- und/oder Aussenkontur.

8. Vorrichtung nach einem der vorhergehenden Ansprüche, wobei das Befestigungselement (170) und/oder das Ringelement (10) ein Metall und/oder eine Legierung umfasst, insbesondere aus einem Metall und/oder einer Legierung besteht.

9. Vorrichtung nach einem der vorhergehenden Ansprüche, wobei der Kragen (20) und/oder das Widerlager (40) an die Sollknickstelle (50) heranreicht.

10. Vorrichtung nach Anspruch 9, wobei an der Sollknickstelle (50) der Kragen (20) einen kleineren Winkel zur Befestigungsrichtung aufweist als das Widerlager (40).

11. Vorrichtung nach einem der vorhergehenden Ansprüche, wobei der Kragen (20) zumindest teilweise parallel zur Befestigungsrichtung verläuft.

12. Vorrichtung nach einem der vorhergehenden Ansprüche, wobei das Widerlager (40) eine insbesondere an die Sollknickstelle (50) heranreichende erste Flanke (41) umfasst.

13. Vorrichtung nach Anspruch 12, wobei das Widerlager (40) eine zweite Flanke (142) aufweist, welche an die erste Flanke (41) anschliesst, insbesondere unmittelbar an die erste Flanke (41) anschliesst.

14. Vorrichtung nach Anspruch 13, wobei sich die zweite Flanke (142) von der ersten Flanke (41), insbesondere von einem radial äusseren Rand der ersten Flanke, radial nach aussen erstreckt.

15. Vorrichtung nach Anspruch 13, wobei sich die zweite Flanke (142) von der ersten Flanke (41), insbesondere von einem radial äusseren Rand der ersten Flanke, radial nach innen erstreckt.

## Claims

1. Device for attaching a first object to a second object with an attachment device (170), in which the attachment device comprises an oblong shaft (172) and a ring element (10), in which the ring element comprises a collar (20), through which the shaft may be pushed in a direction of attachment, and an abutment (40), on which the first object may be supported, **characterised in that** the ring element (10) has a predetermined bending point (50) between the collar (20) and the abutment (40), which makes predetermined bending of the ring element possible, so that the abutment (40) is pushed radially outwards whilst the attachment device is pushed into the second object.

2. Device according to claim 1, in which the predetermined bending point (50) comprises a bending line.

3. Device according to claim 2, in which the bending line runs crosswise to the attachment device.

4. Device according to one of the above claims, in which the attachment device is held in the collar (20), particularly frictionally engaged.

5. Device according to one of the previous claims, in which the attachment device has a head (174), which projects beyond the shaft (172) crosswise to a longitudinal direction of the shaft.

6. Device according to claim 5, in which the shaft (172) has a first and a second end and in which the head (174) is arranged at the first end and/or the second end has a point.

7. Device according to one of the previous claims, in which the ring element (10) surrounds the shaft (172) in a ring shape, particularly with an essentially circular inner and/or outer contour.

8. Device according to one of the previous claims, in which the attachment device (170) and or the ring element (10) comprises a metal and/or an alloy, particularly consists of a metal and/or an alloy.

9. Device according to one of the previous claims, in which the collar (20) and/or the abutment (40) reaches to the predetermined bending point (50).

10. Device according to claim 9, in which the collar (20) has a smaller angle to the direction of attachment than the abutment (40) at the predetermined bending point (50).

11. Device according to one of the previous claims, in which the collar (20) runs at least partly parallel to the direction of attachment.

12. Device according to one of the previous claims, in which the abutment (40) comprises a first side (41) reaching particularly to the predetermined bending point (50).

13. Device according to claim 12, in which the abutment (40) has a second side (142), which is connected to the first side (41), particularly directly to the first side (41).

14. Device according to claim 13, in which the second side (142) extends radially outwards from the first side (41), particularly from a radially outer edge of the first side.

15. Device according to claim 13, in which the second side (142) extends radially inwards from the first side (41), particularly from a radially outer edge of the first side.

## Revendications

1. Dispositif destiné à fixer un premier objet sur un second objet, comportant un élément de fixation (170), dans lequel l'élément de fixation inclut une tige longitudinale (172), et un élément annulaire (10), dans lequel l'élément annulaire inclut une collerette (20) à travers laquelle la tige peut être enfilée dans une direction de fixation, et une butée (40) sur laquelle le premier objet peut être supporté, **caractérisé en ce que** l'élément annulaire (10) a un point de flexion prédéterminée (50) entre la collerette (20) et la butée (40), lequel point permet une rupture en flexion prédéterminée de l'élément annulaire, de telle sorte que la butée (40) est déplacée radialement vers l'extérieur pendant un enfoncement de l'élément de fixation dans le second objet.

2. Dispositif selon la revendication 1, dans lequel le point de flexion prédéterminée (50) inclut une ligne de flexion.

3. Dispositif selon la revendication 2, dans lequel la ligne de flexion s'étend transversalement à la direction de fixation.

4. Dispositif selon l'une des revendications précédentes, dans lequel l'élément de fixation est maintenu dans la collerette (20) et est en particulier maintenu par un contact par frottement.

5. Dispositif selon l'une des revendications précédentes, dans lequel l'élément de fixation comporte une tête (174) qui fait saillie au-delà de la tige (172) transversalement à une direction longitudinale de la tige.

6. Dispositif selon la revendication 5, dans lequel la tige (172) comporte une première et une seconde extrémité, et dans lequel la tête (174) est agencée sur la première extrémité et/ou la seconde extrémité comporte une pointe.

7. Dispositif selon l'une des revendications précédentes, dans lequel l'élément annulaire (10) entoure la tige (172) de manière annulaire, en particulier avec un contour intérieur et/ou extérieur sensiblement circulaire.

8. Dispositif selon l'une des revendications précédentes, dans lequel l'élément de fixation (170) et/ou l'élément annulaire (10) inclut un métal et/ou un alliage et est en particulier constitué d'un métal et/ou d'un alliage.

9. Dispositif selon l'une des revendications précédentes, dans lequel la collerette (20) et/ou la butée (40) atteint le point de flexion prédéterminée (50).

10. Dispositif selon la revendication 9, dans lequel au point de flexion prédéterminée (50), la collerette (20) a un angle dans la direction de fixation plus petit que la butée (40).

11. Dispositif selon l'une des revendications précédentes, dans lequel la collerette (20) s'étend au moins partiellement parallèlement à la direction de fixation.

12. Dispositif selon l'une des revendications précédentes, dans lequel la butée (40) inclut un premier flanc (41) qui atteint en particulier le point de flexion prédéterminée (50).

13. Dispositif selon la revendication 12, dans lequel la butée (40) comporte un second flanc (142) qui est contigu au premier flanc (41), en particulier directement contigu au premier flanc (41).

14. Dispositif selon la revendication 13, dans lequel le second flanc (142) s'étend radialement vers l'extérieur à partir du premier flanc (41), en particulier à partir d'un premier bord radialement extérieur du premier flanc.

15. Dispositif selon la revendication 13, dans lequel le second flanc (142) s'étend radialement vers l'intérieur à partir du premier flanc (41), en particulier à partir d'un premier bord radialement extérieur du premier flanc.
